# EUROPÄISCHE PATENTSCHRIFT

(11) **EP 2 191 166 B1**
(45) Veröffentlichungstag und Bekanntmachung des Hinweises auf die Patenterteilung: **08.02.2012**
(21) Anmeldenummer: 08801353.7
(22) Anmeldetag: 30.07.2008
(51) Int. Cl.: F16F 13/14

(54) **HYDROBUCHSE MIT SEPARATEN BLÄHKAMMERN**
HYDRAULIC SLEEVE WITH SEPARATE EXPANDABLE CHAMBERS
MANCHON HYDRAULIQUE À CHAMBRES DE GONFLAGE SÉPARÉES

(30) Priorität: 18.09.2007 DE 102007044667
(43) Veröffentlichungstag der Anmeldung: 02.06.2010
(73) Patentinhaber: ZF Friedrichshafen AG, 88038 Friedrichshafen (DE)
(72) Erfinder: SCHMITZ, Michael, 53115 Bonn (DE)
(86) Internationale Anmeldenummer: PCT/DE2008/050018
(87) Internationale Veröffentlichungsnummer: WO 2009/036757

(56) Entgegenhaltungen:
- DE-A1- 3 818 287
- DE-A1- 10 213 627
- DE-A1- 10 315 247
- JP-A- 2001 208 125
- JP-A- 2007 263 196

## Beschreibung

Die Erfindung betrifft eine Hydrobuchse, das heißt ein elastomeres Buchsenlager mit hydraulischer Dämpfung. Sie bezieht sich auf eine Hydrobuchse deren mit einer Pumpwirkung ausgestattete Blähkammern in spezieller Weise ausgebildet sind.
Es ist bekannt, elastomere Buchsenlager insbesondere für die Verwendung im Automobilbau zur Lagerung von Komponenten des Fahrwerks mit einer hydraulischen Dämpfung auszustatten. Derartige Lager bestehen im Wesentlichen aus einem strang- oder rohrförmigen metallischen Innenteil und einem dieses Innenteil umgebenden elastomeren Lagerkörper, welcher zumeist mit dem Innenteil durch Vulkanisation verbunden ist. Am oder in dem Lagerkörper sind mindestens zwei Blähkammern zur Aufnahme eines fluiden Dämpfungsmittels ausgebildet, welche bezogen auf die Umfangsrichtung des Lagers gegeneinander versetzt angeordnet und durch mindestens einen Kanal miteinander verbunden sind. Axial oberhalb und unterhalb der Blähkammern ist in einem radial äußeren Bereich des Lagerkörpers im Allgemeinen mindestens ein Armierungselement einvulkanisiert, in welchem, je nach Ausführungsart des Lagers, gegebenenfalls Abschnitte des die Blähkammern miteinander verbindenden Kanals ausgebildet sind. Die Blähkammern sind in der axialen Richtung des Lagers jeweils durch sich vom Kammerboden radial und axial gewölbt nach außen erstreckende Blähwände begrenzt.

Das aus dem Innenteil und dem im Allgemeinen mit ihm durch Vulkanisation verbundenen elastomeren Lagerkörper gebildete Gummi-Metall-Teil wird zumeist von einer vorzugsweise ebenfalls metallischen Außenhülse aufgenommen, kann aber auch bei speziell ausgebildeten Varianten unmittelbar am vorgesehenen Einbauort des Lagers in ein dafür vorgesehenes Aufnahmeauge, beispielsweise eines Fahrwerkslenkers eingepresst werden.

Hydrobuchsen bzw. Hydrolager der zuvor beschriebenen Art sind beispielsweise aus der DE 38 18 287 A1 und der DE 102 13 627 A1 dem Oberbegriff entsprechend bekannt. Soweit in den nachfolgenden Erläuterungen im Zusammenhang mit derartigen Lagern und mit dem erfindungsgemäßen Buchsenlager für die aus dem Innenteil und dem Lagerkörper gebildete Einheit der Begriff Gummi-Metall-Teil verwendet wird, sollen hierunter auch Ausbildungsformen verstanden werden, bei denen der Lagerkörper nicht aus Gummi im eigentlichen Sinne, sondern gegebenenfalls aus einem damit vergleichbaren elastomeren Material besteht oder bei denen das Innenteil und der Lagerkörper im Einzelfalle nicht haftend beziehungsweise durch Vulkanisation miteinander verbunden sind.

Bei in der Praxis eingesetzten gattungsgemäßen Hydrolagern sind die Blähwände häufig sehr stark gewölbt. Durch die starke Wölbung ergeben sich lange Verformungswege, so dass sich die Dauerhaltbarkeit der Blähkammern beziehungsweise der Lager verbessert. Zudem sind sowohl eine niedrige dynamische Verhärtung der Blähwände als auch eine ausreichende Nachgiebigkeit bei hohen, schockartigen Stößen gewährleistet. Jedoch treten bei den bisher bekannten Lagern des Standes der Technik im Falle hoher radialer Lasten und sich daraus ergebender großer Verformungswege immer noch Dauerhaltbarkeitsprobleme auf, sofern entsprechende hohe Lasten gleichzeitig mit einer torsionalen Beanspruchung des Lagers beziehungsweise bei großen Verdrehwinkeln auftreten. Besonders kritisch im Hinblick auf die Dauerhaltbarkeit ist dabei der Bereich des Übergangs zwischen den Blähwänden und den die Kammern in der Umfangsrichtung voneinander trennenden Stegen des elastomeren Lagerkörpers mit dem oder den darin einvulkanisierten Armierungselementen beziehungsweise Kanalteilen. So können in diesem Bereich bei entsprechenden, durch Torsion überlagerten radialen Lasten Risse in den Blähwänden entstehen, wodurch das Lager im Allgemeinen unbrauchbar wird. Im ungünstigen Fall kann es hierbei zu einem Austreten des Dämpfungsmittels kommen, was dann in jedem Falle gleichbedeutend mit dem Ausfall des Lagers ist.

Ein weiteres Problem stellt die Alterung des Materials in Verbindung mit der oftmals hohen thermischen Belastung der Lager dar. Dabei treten insbesondere im Bereich der Vorderachse aufgrund der heute vielfach üblichen Motorraumkapselung hohe thermische Belastungen auf, in deren Folge das Material teilweise auf Temperaturen bis zu 120°C erwärmt wird. Derartig hohe Temperaturen bewirken, dass die Festigkeit der aus dem Material des Lagerkörpers bestehenden Blähwände abnimmt und die Blähwände bereits bei relativ geringen, durch radiale Belastung verursachten Zugspannungen einreißen.

Aufgabe der Erfindung ist es, eine Hydrobuchse beziehungsweise ein elastomeres Buchsenlager mit hydraulischer Dämpfung bereitzustellen, welches gegenüber den aus dem Stand der Technik bekannten Lagern eine erhöhte Dauerhaltbarkeit aufweist und dabei auch im Falle eines gleichzeitigen Einwirkens radialer Lasten und torsionaler Kräfte eine hohe Standfestigkeit besitzt. Vorzugsweise soll das Lager zudem so gestaltet sein, dass gute statische und dynamische Eigenschaften sowie eine hohe Dauerhaltbarkeit auch im Falle dessen gewährleistet sind, dass das Lager im Betrieb hohen Temperaturen ausgesetzt ist.

Die Aufgabe wird durch ein elastomeres Buchsenlager mit den Merkmalen des Hauptanspruchs gelöst. Vorteilhafte Aus- beziehungsweise Weiterbildungen des erfindungsgemäßen Lagers sind durch die Unteransprüche gegeben.

Das zur Lösung der Aufgabe vorgeschlagene elastomere Buchsenlager mit hydraulischer Dämpfung besteht, wie von gattungsgemäßen Lagern bekannt und bereits eingangs beschrieben, aus einem strang- oder zylinderförmigen metallischen Innenteil, einem das Innenteil umgebenden, elastomeren Lagerkörper, mindestens einem an den axialen Lagerenden jeweils in einem radial äußeren Bereich des Lagerkörpers einvulkanisierten Armierungselement, mindestens zwei Blähkammern zur Aufnahme eines fluiden Dämpfungsmittels, welche durch mindestens einen Kanal miteinander verbundenen sind und einer die vorgenannten Teile vorzugsweise ebenfalls metallischen Außenhülse. Dabei sind das Innenteil und der Lagerkörper vorzugsweise haftend miteinander verbunden. Die Blähkammern sind in der Lagerumfangsrichtung jeweils durch vom Innenteil radial aufragende Stege räumlich voneinander getrennt und gegeneinander versetzt angeordnet. Sie sind ferner axial beidseitig durch sich aus dem Lagerinneren radial und axial nach außen erstreckende und gewölbt verlaufende Blähwände begrenzt, welche sie von nierenförmigen Vertiefungen trennen, die sich von den axialen Lagerenden jeweils zwischen dem armierten Bereich des Lagerkörpers und dem Innenteil in der axialen Richtung in den Lagerkörper hinein erstrecken.

Abweichend vom Stand der Technik sind jedoch die Blähkammern einschließlich ihrer Blähwände bei dem erfindungsgemäßen Buchsenlager jeweils als eine gegenüber dem von dem Innenteil und dem Lagerkörper gebildeten Gummi-Metall-Teil separate Baugruppe ausgebildet. Eine solche Baugruppe zur Ausbildung einer jeweiligen Blähkammer besteht aus einem die Blähwände ausbildenden und sie am Boden der Blähkammern miteinander verbindenden elastomeren Formkörper und einem die Blähkammer in ihrem radial äußeren Bereich rahmenartig einfassenden Trägerteil. Ferner wird der von dem Trägerteil eingefasste elastomere Formkörper erfindungsgemäß nach dem Einsetzen der jeweiligen Blähkammer in das Gummi-Metall-Teil auf der radialen Außenseite der Blähkammer mit einem Kanalträger abgedeckt. Dabei werden die Blähkammern mittels der sie jeweils abdeckenden Kanalträger, welche jeweils eine Durchtrittsöffnung für das Dämpfungsmittel aufweisen, gleichzeitig in dem Gummi-Metall-Teil zwischen dessen armierten axial äußeren Bereichen lagefixiert. Das aus dem Innenteil und dem elastomeren Lagerkörper bestehende Gummi-Metall-Teil mit den darin eingesetzten und mit ihren Böden am Innenteil anliegenden sowie axial lagefixierten Blähkammern wird von der Außenhülse aufgenommen.

Bei den aus dem Stand der Technik bekannten Lagern beziehungsweise Hydrobuchsen werden die beiden wesentlichen Aufgaben des Lagers, nämlich die Bereitstellung einer statischen Grundsteifigkeit und dynamischer, durch aufgrund der Pumpwirkung der Kammern erzielter Dämpfungseigenschaften konstruktionsbedingt durch ein einziges Bauteil erfüllt, nämlich durch das schon angesprochene, aus dem Innenteil und dem Lagerkörper, einschließlich der Blähkammern mit dem sie verbindenden Kanal bestehende Gummi-Metall-Teil. Insoweit ist es schwierig, durch eine geeignete Materialauswahl und entsprechende Dimensionierung des betreffenden Bauteils einen Kompromiss zu finden, welcher sowohl den Anforderungen an die statische Steifigkeit und das dynamische Dämpfungsverhalten als auch der Temperaturverträglichkeit gerecht wird und dabei eine hohe Dauerhaltbarkeit des Lagers gewährleistet. Diese Schwierigkeit wird durch die Erfindung überwunden Grundgedanke der Erfindung ist es dabei, die von dem Hydrolager zu erfüllenden Funktionen, nämlich das Bereitstellen einer gewünschten statischen Steifigkeit einerseits und das Bewirken einer Dämpfung dynamischer, aus radialer Richtung eingetragener Schwingungen andererseits, auf zwei separate Baugruppen aufzuteilen. Dabei wird die statische Steifigkeit durch das aus dem Innenteil und dem Lagerkörper mit der oder den einvulkanisierten Armierungen bestehende Gummi-Metall-Teil bereitgestellt, während die demgegenüber separaten Blähkammern, insbesondere durch die Auswahl des die Blähwände ausbildenden elastomeren Materials, hinsichtlich ihrer Dauerhaltbarkeit optimiert und gegebenenfalls auch über die Shorehärte des Materials besser an das geforderte Dämpfungsverhalten angepasst werden können. Auch eine bessere Erfüllung sonstiger, später noch zu diskutierende Anforderungen ist durch eine geeignete Materialwahl für den Formkörper der Blähkammern möglich. Zu diesem Zweck können beziehungsweise werden in der Regel für das Gummi-Metall-Teil einerseits und für die separaten, die Blähkammern ausbildenden Baugruppen andererseits verschiedene elastomere Materialien verwendet.

Bei einer praxisgerechten Ausbildungsform des erfindungsgemäßen Elastomerlagers mit einem langen Massendämpfungskanal sind Abschnitte des Kanals in dem oder den an den axialen Lagerenden in den Lagerkörper einvulkanisierten Armierungselementen ausgebildet. Die Erfindung umfasst jedoch auch Ausbildungsformen, bei denen die Kammern durch einen kurzen Kanal miteinander verbunden sind, welcher dann ausschließlich in den die Blähkammern auf der radialen Außenseite abdeckenden Kanalträgern ausgebildet ist. In diesem Falle kann das an den axialen Lagerenden in den Lagerkörper einvulkanisierte Armierungselement beispielsweise in der Form eines gerollten Käfigs ausgebildet sein.

Innerhalb der eine separate Blähkammer ausbildenden Baugruppe kann das Trägerteil mit dem zugehörigen elastomeren Formkörper haftend, das heißt vorzugsweise durch Vulkanisation verbunden sein. Denkbar ist aber auch eine formschlüssige Verbindung, bei welcher ein Wulstrand der Blähwände um das die Blähkammer einrahmende Trägerteil herumgelegt wird. Der die jeweilige Blähkammer auf ihrer radialen Außenseite abdeckende Kanalträger ist entsprechend einer möglichen Ausbildungsform des erfindungsgemäßen Lagers auf der radial äußeren Seite auf den jeweiligen Formkörper der Kammer so aufgelegt, dass er an seinen axialen Enden das den Formkörper rahmenartig einfassende Trägerteil umfasst.

Bei einer weiteren Ausbildungsform des erfindungsgemäßen elastomeren Buchsenlagers ist ein Blähkammerpaar dadurch ausgebildet, dass zwei, jeweils eine Blähkammer ausbildende elastomere Formkörper durch einen aus demselben Elastomer bestehenden, sich in der Umfangsrichtung erstreckenden Ring miteinander verbunden sind. In diesem Falle werden bei einem mit zwei Blähkammern ausgestatteten Lager beide Kammern gleichzeitig als eine Baugruppe in das aus dem Innenteil und dem Lagerkörper bestehende Gummi-Metall-Teil eingesetzt. Auch hierbei erfolgt die Fixierung in der axialen Richtung mittels der beiden, die Kammern abdeckenden und zwischen den armierten Enden des Lagerkörpers eingefügten Kanalträger.

Vorzugsweise ist das erfindungsgemäße elastomere Lager beidseitig mit Radialanschlägen ausgestattet, welche den radialen Federweg des Lagers, insbesondere zu dessen Schutz vor Zerstörung bei Überlasten, begrenzen. Die Radialanschläge können durch radial nach innen ragende Erhebungen des elastomeren Lagerkörpers im Bereich der an seinen axialen äußeren Enden einvulkanisierten Armierungselemente ausgebildet sein. Gemäß einer anderen Möglichkeit ist zur Ausbildung der Radialanschläge ein ein- oder zweiteilig ausgeführtes Anschlagelement aus Metall oder Kunststoff in das Lager eingefügt. Das entsprechende Anschlagelement wird, das Innenteil umgebend, zwischen dem Innenteil und den Böden der Blähkammern eingeschoben und weist an seinen axialen Enden radial nach außen aufragende Aufwölbungen auf.

Wie bereits angesprochen, ermöglicht es die separate Ausführung der Blähkammern, für diese beziehungsweise deren Formkörper Materialien einzusetzen, welche unabhängig von ihrer etwaigen statischen Steifigkeit eine optimale Auslegung der Kammern im Hinblick auf deren dynamisches Dämpfungsverhalten oder andere Eigenschaften des Lagers ermöglichen. Dabei ist es insbesondere auch möglich, dem eingangs aufgezeigten Problem Rechnung zu tragen und für die die Blähkammern ausbildenden elastomeren Formteile besonders gut temperaturbeständige Materialien zu verwenden und so die Dauerhaltbarkeit der Lager auch im Falle des Einsatzes unter hohen Temperaturen zu erhöhen. Hierfür kommen insbesondere EPDM-Gummi (EPDM = Ethylene Propylene Diene Monomer) oder Silikonkautschuk in Betracht, welche bei hohen Temperaturen klare Vorteile gegenüber den üblicherweise für den Lagerkörper verwendeten Materialien, wie NR (Natural Rubber), BR (Butadiene Rubber) oder SBR (Styrene Butadiene Rubber) aufweisen.

Die Erfindung soll nach folgend anhand von Ausführungsbeispielen nochmals erläutert werden, in den zugehörigen Zeichnungen zeigen:
- Fig. 1:: eine mögliche Ausbildungsform des erfindungsgemäßen Buchsenlagers,
- Fig. 2:: das Gummi-Metall-Teil des Buchsenlagers nach Fig. 1 mit einem radial durch das Teil geführten Schnitt,
- Fig. 3a:: die separate Baugruppe einer Blähkammer des Lagers nach der Fig. 1
- Fig. 3b:: den die Blähkammer gemäß Fig. 3a nach dem Einfügen in das Gummi-Metall-Teil abdeckenden Kanalträger,
- Fig. 4:: eine weitere mögliche Ausbildungsform des Buchsenlagers,
- Fig. 5:: ein erfindungsgemäß separat ausgebildetes Kammerpaar.

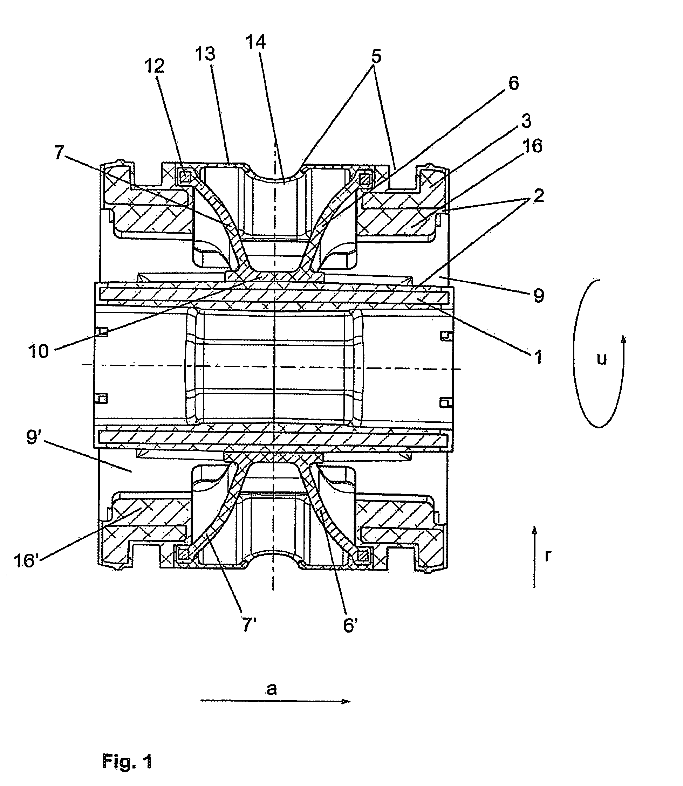

Die Fig. 1 zeigt eine mögliche Ausbildungsform des erfindungsgemäßen Buchsenbeziehungsweise Hydrolagers mit einem in axialer Richtung a durch das Lager geführten Schnitt, wobei das Lager ohne die Außenhülse dargestellt ist. Das elastomere Buchsenlager besteht aus dem metallischen Innenteil 1, dem das Innenteil 1 umgebenden beziehungsweise es einbettenden und mit ihm durch Vulkanisation zu einem Gummi-Metall-Teil 1, 2 verbundenen elastomeren Lagerkörper 2 mit einem in den axial äußeren Bereichen des Lagerkörpers 2 einvulkanisierten Armierungselement 3 aus Kunststoff oder Metall, aus zwei Blähkammern 4, 4' mit Blähwänden 6, 6', 7, 7' zur Aufnahme des Dämpfungsmittels und aus einem die Kammern 4, 4' miteinander verbindenden Kanal 5. Die genannten Teile werden von einer, wie bereits ausgeführt, hier nicht dargestellten hohlzylindrischen Außenhülse aufgenommen. Der die Blähkammern 4, 4' miteinander verbindende Kanal 5 ist abschnittsweise einerseits in beziehungsweise an dem entsprechend geformten und mit dem Elastomer des Lagerkörpers 2 bedeckten Armierungselement 3 und andererseits in jeweils einem die Blähkammern 4, 4' radial außen abdeckenden und begrenzenden Kanalträger 13 ausgebildet. In den Kanalträger 13 ist jeweils eine Durchtrittsöffnung 14 für das im radialen Belastungsfall auf dem Außenumfang durch den Kanal 5 von einer Blähkammer 4, 4' in die andere Blähkammer 4', 4 fließende Dämpfungsmittel angeordnet.

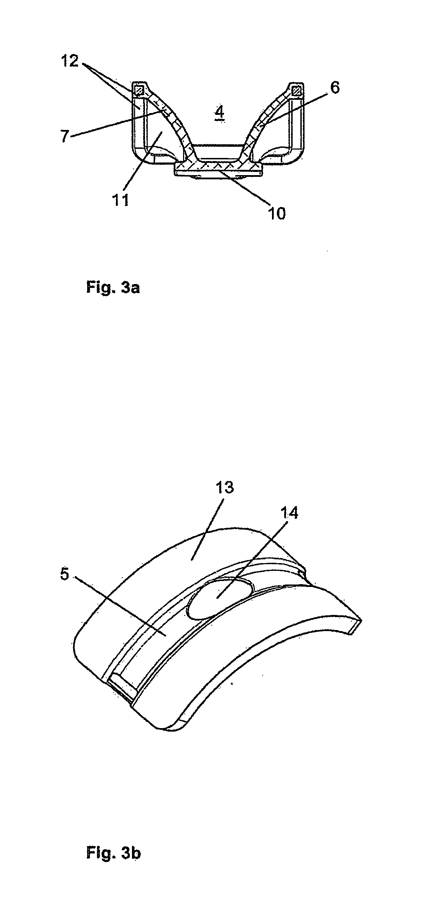

Erfindungsgemäß bilden die Blähkammern 4, 4' mit ihren Blähwänden 6, 6', 7, 7' je eine separate (nochmals in der Fig. 3a dargestellte) Baugruppe aus. Diese beiden Baugruppen zur Ausbildung der Blähkammern 4, 4' sind in das Gummi-Metall-Teil 1, 2 eingefügt, wobei der Boden 10 der jeweiligen Blähkammer 4, 4' an dem mit einer dünnen elastomeren Schicht des Lagerkörpers 2 bedeckten Innenteil 1 anliegt. Im Bereich des an den axialen Enden des Lagerkörpers 2 einvulkanisierten Armierungselements 3 sind durch eine entsprechende Ausformung des Lagerkörpers 2 radial nach innen ragende Aufwölbungen vorgesehen, welche in den axial beidseitig gegen die Blähwände 6, 6', 7, 7' der Blähkammern 4, 4' in das Lager hineinragenden nierenförmigen Vertiefungen 9, 9' jeweils einen Radialanschlag 16, 16' ausbilden. Durch die Radialanschläge 16, 16' wird der radiale Federweg des Lagerkörpers 2 und somit insbesondere der Verformungsweg der Blähwände 6, 6', 7, 7' zum Schutz vor einer Zerstörung des Lagers bei radialen Überlasen begrenzt.

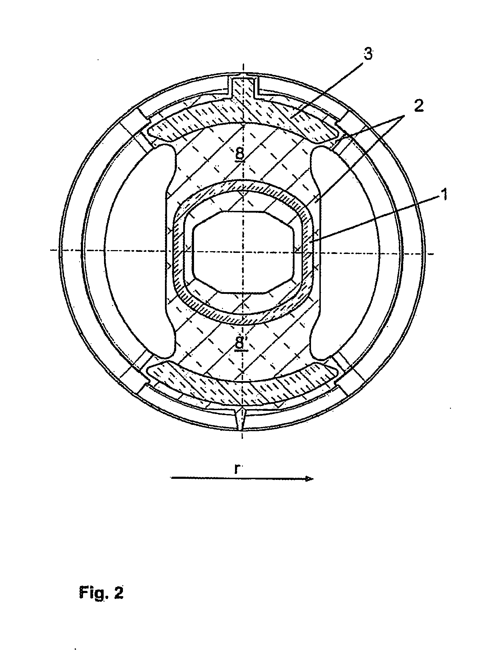

Die Fig. 2 zeigt das Gummi-Metall-Teil 1, 2 des Buchsenlagers nach der Fig. 1 in einem auf axialer Höhe im Bereich der hier noch nicht in das Gummi-Metall-Teil 1, 2 eingesetzten Blähkammern 4, 4' radial geführten Schnitt. Zu erkennen sind in dieser Darstellung die, die Blähkammern bezüglich der Umfangsrichtung u räumlich voneinander trennenden Stege 8, 8' des elastomeren Lagerkörpers 2 und das in diese einvulkanisierte, Abschnitte des hier nicht zu sehenden Kanals ausbildende sowie im Bereich der einzusetzenden Blähkammern 4, 4' Ausnehmungen aufweisende Armierungselement 3.

In den Fig. 3a sind nochmals die Elemente einer als separate Baugruppe ausgebildeten Blähkammer 4 dargestellt, welche in das Gummi-Metall-Teil 1, 2 nach der Fig. 2 einzufügen ist. Die Fig. 3a, in welcher die Baugruppe im Axialschnitt dargestellt ist, zeigt den die Blähwände 6, 7 der Blähkammer 4 ausbildenden und sie im Bereich des Kammerbodens 10 miteinander verbindenden elastomeren Formkörper 11. Ferner ist in der Fig. das in diesen Formkörper 11 zur Armierung einvulkanisierte Trägerteil 12 zu erkennen, welches den radial äußeren Bereich der Blähkammer 4 rahmenartig einfasst und den elastomeren Formkörper 11 gewissermaßen aufspannt. Die separate Ausbildung der Blähkammern 4, 4' ermöglicht es, für deren elastomeren Formkörper 11 ein anderes Material zu verwenden, als für den Lagerkörper 2. Hierdurch können die Blähkammern 4, 4' insbesondere durch entsprechende Materialwahl hinsichtlich ihrer Dauerhaltbarkeit optimiert werden. Für den Formkörper 11 kann unter diesem Gesichtspunkt je nach Einsatzfall zudem ein besonders temperaturbeständiges elastomeres Material wie beispielsweise EPDM oder Silikonkautschuk verwendet werden. Beim Einsetzten der Blähkammern 4, 4' in das Gummi-Metall-Teil 1, 2 und beim sich anschließenden Einfügen des Gummi-Metall-Teils 1, 2 in die Außenhülse bewirkt die Überdeckung des Lagerkörpers 2 zur Außenhülse, also ein leichtes Übermaß des Lagerkörpers 2 gegenüber der Außenhülse, dass der Kanalträger 13 das rahmenförmige Trägerteil 12 derart auf das Gummi-Metall-Teil 1, 2 presst, dass kein Dämpfungsmittel aus dem Hydrolager austreten kann. Der Kanalträger 13, welcher die Blähkammer 4, 4' nach ihrem Einfügen in das Gummi-Metall-Teil 1, 2 gemäß Fig. 2 radial außen abdeckt beziehungsweise begrenzt, ist nochmals in der Fig. 3b gezeigt. Mittels dieses Kanalträgers 13 wird die betreffende Blähkammer 4, 4', wie aus der Fig. 1 ersichtlich, zudem nach dem Einsetzen in das Gummi-Metall-Teil 1, 2 zwischen den axial äußeren armierten Bereichen des Lagerkörpers 2 bezüglich der axialen Richtung a lagefixiert. Der Kanalträger 13 mit dem darin ausgebildeten Abschnitt des Kanals 5 weist, wie bereits ausgeführt, eine Durchtrittsöffnung 14 für das Dämpfungsmittel auf.

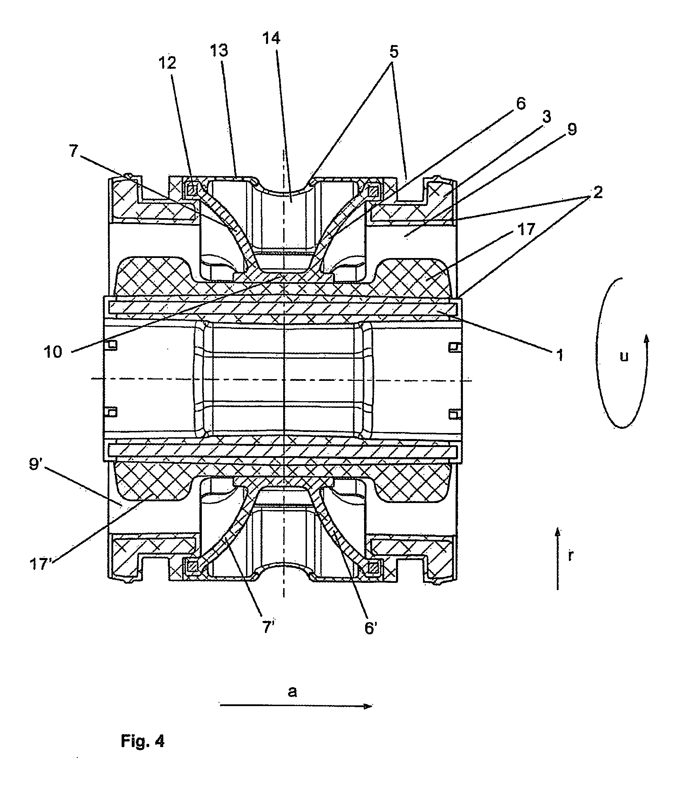

In der Fig. 4 ist eine gegenüber der Ausbildungsform gemäß der Fig. 1 etwas modifizierte Ausbildungsform des erfindungsgemäßen Buchsenlagers ebenfalls in axial geschnittener Darstellung gezeigt. Bei dieser Ausbildungsform sind die Radialanschläge 17, 17' nicht durch Teile des Lagerkörpers 2, sondern durch ein gesondertes Anschlagelement 18 aus Kunststoff oder Metall ausgebildet. Die Radialanschläge 17, 17' ragen bei ansonsten gleicher Funktion in diesem Fall ausgehend vom Innenteil 1 nach radial außen in die nierenförmigen Vertiefungen 9, 9' hinein. Je nach Höhe der Radialanschläge 17, 17' kann das Anschlagelement 18 ein oder zweiteilig ausgebildet und demzufolge von einem oder den beiden axialen Enden des Lagers zwischen den Böden 10 der Blähkammern 4, 4' und dem von einer elastomeren Schicht des Lagerkörpers 2 bedeckten Innenteil 1 in das Lager eingeschoben werden. Hierdurch wird in vorteilhafter Weise das Elastomer der Blähkammern 4, 4' in radialer Richtung r vorgespannt.

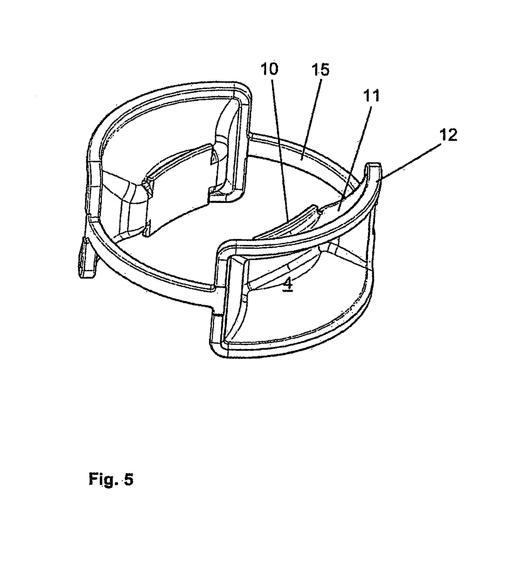

Wie in der Fig. 5 gezeigt, besteht neben einer separaten Ausbildung jeder einzelnen der beiden Blähkammern 4, 4' die Möglichkeit, die Blähkammern 4, 4' als gegenüber dem Gummi-Metall-Teil 1, 2 separates Kammerpaar auszubilden. Hierbei sind die Blähkammern 4, 4' durch einen in der Umfangsrichtung u des erfindungsgemäßen Buchsenlagers umlaufenden Ring 15 aus dem Material ihrer elastomeren Formkörper 11 miteinander verbunden.

Bei dem erfindungsgemäßen Buchsenlager sind in vorteilhafter Weise große radiale Verformungen möglich ohne Beschädigung der Blähkammern 4, 4', da auf diese beziehungsweise ihre Blähwände 6, 6', 7, 7' aufgrund ihrer separaten Ausbildung fast keine Zugbelastungen wirken. Dadurch, dass auf die Blähwände 6, 6', 7, 7' auch bei großer radialer Verformung fast keine Zugbelastungen wirken, sind zudem gegebenenfalls auch gleichzeitig große Verdrehwinkel ohne Beschädigung des Lagers möglich.

Im normalen Fahrbetrieb sind beide Blähkammern 4, 4' aktiv. Das heißt, beide Blähkammern 4, 4' weisen bezüglich des Dämpfungsmittels eine Pumpwirkung auf, so dass sich gute dynamische Eigenschaften des Lagers ergeben. Im stark ausgelenkten Zustand (z.B. 3mm Außermittigkeit) ist nur noch eine Blähkammer 4, 4' aktiv. Diese aktive Blähkammer 4, 4' arbeitet gegen den "Umgebungszustand" der passiven Blähkammer 4', 4, wodurch ebenfalls gute dynamische Eigenschaften sicher gestellt sind. Da die Blähkammern 4, 4' nur sehr geringe Zugbelastungen zu übertragen haben (lediglich durch das Aufblähen der jeweils anderen, dann passiven Blähkammer 4', 4 entstehen Zugspannungen) ist eine sehr gute Dauerhaltbarkeit gewährleistet. Insbesondere der besonders kritische Bereich des Übergangs zwischen den Blähwänden 6, 6', 7, 7' und den die Blähkammern 4, 4' in der Umfangsrichtung u voneinander trennenden Stegen 8, 8' keine Zugbelastungen mehr. Da die Blähkammern 4, 4' und die Stege 8, 8' konstruktiv voneinander getrennt sind, erfolgt kein Austritt von Dämpfungsmittel, wenn ein Steg 8, 8' aufgrund hoher Belastungen oder eventueller Materialermüdung gegebenenfalls einreißt.

Vorteilhafter Weise können die Stege 8, 8' zudem durch eine optimale Gestaltung der Anbindung an das in den Lagerkörper einvulkanisierte Armierungselement 3 beziehungsweise Kanalteil bei der Fertigung des Lagers über die gesamte Länge axial entformt werden. Bei den aus dem Stand der Technik bekannten Lösungen muss der Steg hingegen innerhalb der Blähkammer 4, 4' im Bereich der Anbindung radial entformt werden, was fertigungstechnisch nachteilig ist, wobei eine optimale Gestaltung des Anbindungsbereichs einen ebenfalls fertigungstechnisch nachteiligen Hinterschnitt verursachen würde.

### Bezugszeichenliste

- 1: Innenteil
- 2: Lagerkörper
- 3: Armierungselement beziehungsweise Kanalteil
- 4, 4': Blähkammer
- 5: Kanal
- 6, 6', 7, 7': Blähwand
- 8, 8': Steg
- 9, 9': Vertiefung
- 10: Boden
- 11: Formteil
- 12: Trägerteil
- 13: Kanalträger
- 14: Durchtrittsöffnung
- 15: Ring
- 16, 16': Radialanschlag
- 17, 17': Radialanschlag
- 18: Anschlagelement

## Patentansprüche

1. Elastomeres Buchsenlager mit hydraulischer Dämpfung, bestehend aus einem Gummi-Metall-Teil (1, 2), mit einem strang- oder rohrförmigen metallischen Innenteil (1), einem das Innenteil (1) umgebenden elastomeren Lagerkörper (2) und mindestens einem an den axialen Enden sowie jeweils in einem radial äußeren Bereich des Lagerkörpers (2) in diesen einvulkanisierten Armierungselement (3), aus mindestens zwei, bezüglich der axialen Richtung (a) zwischen den armierten Bereichen des Lagekörpers (2) angeordneten Blähkammern (4, 4') zur Aufnahme eines fluiden Dämpfungsmittels und aus einer Außenhülse, wobei die durch mindestens einen Kanal (5) miteinander verbundenen Blähkammern (4, 4') in der Lagerumfangsrichtung (u) jeweils durch vom Innenteil (1) radial aufragende Stege (8, 8') räumlich voneinander getrennt und gegeneinander versetzt angeordnet sind sowie axial beidseitig durch sich aus dem Lagerinnern radial und axial nach außen erstreckende und gewölbt verlaufende Blähwände (6, 6', 7, 7') von nierenförmigen Vertiefungen (9, 9') getrennt sind, welche sich von den axialen Lagerenden jeweils zwischen dem armierten Bereich des Lagerkörpers (2) und dem Innenteil (1) in axialer Richtung (a) in den Lagerkörper (2) hinein erstrecken, **dadurch gekennzeichnet, dass** die Blähkammern (4, 4') einschließlich ihrer Blähwände (6, 6', 7, 7') jeweils als eine gegenüber dem von dem Innenteil (1) und dem armierten Lagerkörper (2) gebildeten Gummi-Metall-Teil (1, 2) separate Baugruppe ausgebildet sind, welche aus einem die Blähwände (6, 6', 7, 7') ausbildenden und sie am Boden (10) der Blähkammer (4, 4') miteinander verbindenden elastomeren Formkörper (11) und einem die Blähkammer (4, 4') in ihrem radial äußeren Bereich rahmenartig einfassenden Trägerteil (12) besteht, wobei der von dem Trägerteil (12) eingefasste elastomere Formkörper (11) nach dem Einsetzen einer jeweiligen Blähkammer (4, 4') in das Gummi-Metall-Teil (1, 2) mittels eines die Blähkammer (4, 4') auf ihrer radialen Außenseite abdeckenden und mit einer Durchtrittsöffnung (14) für das Dämpfungsmittel versehenen Kanalträgers (13) zwischen den armierten axial äußeren Bereichen des Lagekörpers (2) lagefixiert ist und das Gummi-Metall-Teil (1, 2) mit den eingesetzten und lagefixierten Blähkammern (4, 4') von der Außenhülse aufgenommen wird.

2. Elastomeres Buchsenlager nach Anspruch 1, **dadurch gekennzeichnet, dass** Abschnitte des die Blähkammern (4, 4') miteinander verbindenden Kanals (5) in dem oder an dem, im Bereich der axialen Lagerenden in den Lagerkörper einvulkanisierten mindestens einen Armierungselement (3) ausgebildet sind.

3. Elastomeres Buchsenlager nach Anspruch 1 oder 2, **dadurch gekennzeichnet, dass** das Trägerteil (12) und der elastomere Formkörper (11) der Blähkammern (4, 4') haftend miteinander verbunden sind.

4. Elastomeres Buchsenlager nach einem der Ansprüche 1 bis 3, **dadurch gekennzeichnet, dass** der Kanalträger (13) auf die jeweilige Blähkammer (4, 4') aufgelegt ist und an seinen axialen Enden das den elastomeren Formkörper (11) einer Blähkammer (4, 4') rahmenartig einfassende Trägerteil (12) umfasst.

5. Elastomeres Buchsenlager nach einem der Ansprüche 1 bis 4, **dadurch gekennzeichnet, dass** zur Ausbildung eines Blähkammerpaares (4, 4') zwei elastomere Formkörper (11) durch einen aus demselben Elastomer bestehenden, sich in der Umfangsrichtung (u) erstreckenden Ring (15) miteinander verbunden sind.

6. Elastomeres Buchsenlager nach einem der Ansprüche 1 bis 5, **dadurch gekennzeichnet, dass** an den axialen Lagerenden Radialanschläge (16, 16'; 17, 17') angeordnet sind, welche durch innerhalb der nierenförmigen Vertiefungen (9, 9') nach radial innen aufragende Aufwölbungen des Lagerkörpers (2) ausgebildet sind.

7. Elastomeres Buchsenlager nach einem der Ansprüche 1 bis 5, **dadurch gekennzeichnet, dass** zur Ausbildung von Radialanschlägen (17, 17') an den axialen Lagerenden ein mit Ausnehmungen für die Stege (8, 8') versehenes Anschlagelement (18) aus Metall oder Kunststoff eingefügt ist, wobei das Anschlagelement (18) entweder als einstückiges Element von einem der axialen Lagerenden oder als axial zweigeteiltes Element von beiden axialen Lagerenden zwischen den Böden (10) der Blähkammern (4, 4') und dem Innenteil (1) in das Lager eingeschoben ist und an den axialen Lagerenden radial nach außen aufragende Aufwölbungen aufweist.

8. Elastomeres Buchsenlager nach einem der Ansprüche 1 bis 7, **dadurch gekennzeichnet, dass** die, die Blähwände (6, 6', 7, 7') der Blähkammern (4, 4') ausbildenden elastomeren Formkörper (11) aus einem Material bestehen, welches eine gegenüber dem Material des Lagerkörpers (2) höhere Temperaturbeständigkeit aufweist.

9. Elastomeres Buchsenlager nach Anspruch 8, **dadurch gekennzeichnet, dass** die elastomeren Formkörper (11) der Blähkammern (4, 4') aus EPDM-Gummi bestehen.

10. Elastomeres Buchsenlager nach Anspruch 8, **dadurch gekennzeichnet, dass** die elastomeren Formkörper (11) der Blähkammern (4, 4') aus Silikonkautschuk bestehen.

## Claims

1. Elastomeric sleeve bearing with hydraulic damping, consisting of a rubber-metal part (1, 2), having an elongate or tubular metallic inner part (1), an elastomeric bearing body (2) enclosing the inner part (1) and at least one reinforcing element (3) at the axial ends and vulcanized into the latter in each case in a radially outer region of the bearing body (2), also of at least two expansion chambers (4, 4') for receiving a fluid damping medium, said expansion chambers (4, 4') being arranged, with regard to the axial direction (a), between the reinforced regions of the bearing body (2), and also of an outer sleeve, wherein the expansion chambers (4, 4'), which are connected together by at least one channel (5), are spatially separated from one another in the circumferential direction (u) of the bearing in each case by ribs (8, 8') that project radially from the inner part (1) and are arranged in an offset manner with respect to one another and are also separated from one another axially on both sides by expanding walls (6, 6', 7, 7') of kidney-shaped depressions (9, 9'), said expanding walls extending radially and axially outwards from the bearing interiors, running in a curved manner and extending in the axial direction (a) into the bearing body (2) from the axial bearing ends in each case between the reinforced region of the bearing body (2) and the inner part (1), **characterized in that** the expansion chambers (4, 4'), including their expanding walls (6, 6', 7, 7'), are each configured as a separate sub-assembly with respect to the rubber-metal part (1, 2) formed by the inner part (1) and the reinforced bearing body (2), said sub-assembly consisting of an elastomeric moulding (11), which forms the expanding walls (6, 6', 7, 7') and connects them together at the base (10) of the expansion chamber (4, 4'), and of a carrier part (12), which encloses the expansion chamber (4, 4') in a frame-like manner in its radially outer region, wherein the elastomeric moulding (11) enclosed by the carrier part (12) is positionally fixed between the reinforced axially outer regions of the bearing body (2) after the insertion of a respective expansion chamber (4, 4') into the rubber-metal part (1, 2) by means of a channel carrier (13) that covers the expansion chamber (4, 4') on its radially outer side and is provided with a through-passage opening (14) for the damping medium, and the rubber-metal part (1, 2) with the inserted and positionally-fixed expansion chambers (4, 4') is received by the outer sleeve.

2. Elastomeric sleeve bearing according to Claim 1, **characterized in that** sections of the channel (5) that connects the expansion chambers (4, 4') together are formed in or on the at least one reinforcing element (3) vulcanized into the bearing body in the region of the axial bearing ends.

3. Elastomeric sleeve bearing according to Claim 1 or 2, **characterized in that** the carrier part (12) and the elastomeric moulding (11) of the expansion chambers (4, 4') are connected together in an adhesive manner.

4. Elastomeric sleeve bearing according to one of Claims 1 to 3, **characterized in that** the channel carrier (13) is positioned on the respective expansion chamber (4, 4') and comprises at its axial ends the carrier part (12) which encloses the elastomeric moulding (11) of an expansion chamber (4, 4') in a frame-like manner.

5. Elastomeric sleeve bearing according to one of Claims 1 to 4, **characterized in that**, in order to form a pair of expansion chambers (4, 4'), two elastomeric mouldings (11) are connected together by a ring (15) that consists of the same elastomer and extends in the circumferential direction (u).

6. Elastomeric sleeve bearing according to one of Claims 1 to 5, **characterized in that** radial stops (16, 16'; 17, 17') are arranged at the axial bearing ends and are formed by bulges of the bearing body (2) that project radially inwards within the kidney-shaped depressions (9, 9').

7. Elastomeric sleeve bearing according to one of Claims 1 to 5, **characterized in that**, in order to form radial stops (17, 17') at the axial bearing ends, a metal or plastic stop element (18) provided with recesses for the ribs (8, 8') is introduced, wherein the stop element (18) is inserted into the bearing, between the bases (10) of the expansion chambers (4, 4') and the inner part (1), either as a one-piece element from one of the axial bearing ends or as an element divided axially into two parts from the two axial bearing ends, and has bulges that project radially outwards at the axial bearing ends.

8. Elastomeric sleeve bearing according to one of Claims 1 to 7, **characterized in that** the elastomeric mouldings (11) that form the expanding walls (6, 6', 7, 7') of the expansion chambers (4, 4') consist of a material which has higher thermal stability than the material of the bearing body (2).

9. Elastomeric sleeve bearing according to Claim 8, **characterized in that** the elastomeric mouldings (11) of the expansion chambers (4, 4') consist of EPDM rubber.

10. Elastomeric sleeve bearing according to Claim 8, **characterized in that** the elastomeric mouldings (11) of the expansion chambers (4, 4') consist of silicone rubber.

## Revendications

1. Palier à douille élastomère à amortissement hydraulique, constitué d'une pièce en caoutchouc-métal (1, 2) avec une partie interne métallique (1) de forme tubulaire ou cylindrique, un corps de palier élastomère (2) entourant la partie interne (1) et au moins un élément de renforcement (3) aux extrémités axiales et vulcanisé à chaque fois dans le corps de palier (2) dans une région du corps de palier (2) radialement extérieure, constitué d'au moins deux chambres gonflables (4, 4') disposées par rapport à la direction axiale (a) entre les régions renforcées du corps de palier (2) pour recevoir un agent d'amortissement fluide, et d'une douille extérieure, les chambres gonflables (4, 4') reliées l'une à l'autre par au moins un canal (5) étant séparées spatialement l'une de l'autre dans la direction périphérique du palier (u) à chaque fois par des nervures (8, 8') saillant radialement depuis la partie interne (1) et étant disposées de manière décalée l'une de l'autre et étant aussi séparées axialement des deux côtés par des parois gonflables (6, 6', 7, 7') de renfoncements en forme de haricot (9, 9') s'étendant sous forme courbe et s'étendant depuis l'intérieur du palier radialement et axialement vers l'extérieur, les renfoncements en forme de haricot s'étendant depuis les extrémités de palier axiales à chaque fois entre la région renforcée du corps de palier (2) et la partie interne (1) dans la direction axiale (a) dans le corps de palier (2), **caractérisé en ce que** les chambres gonflables (4, 4'), conjointement avec leurs parois gonflables (6, 6', 7, 7'), sont réalisées à chaque fois sous forme de module séparé par rapport à la pièce en caoutchouc-métal (1, 2) formée par la partie interne (1) et le corps de palier renforcé (2), le module se composant d'un corps moulé élastomère (11) constituant les parois gonflables (6, 6', 7, 7') et les reliant l'une à l'autre au niveau du fond (10) de la chambre gonflable (4, 4') et d'une partie de support (12) enveloppant à la manière d'un cadre la chambre gonflable (4, 4') dans sa région radialement extérieure, le corps moulé élastomère (11) enveloppé par la partie de support (12), après l'insertion d'une chambre gonflable respective (4, 4') dans la pièce en caoutchouc-métal (1, 2), étant fixé en position entre les régions renforcées axialement extérieures du corps de palier (2) au moyen d'un support de canal (13) recouvrant la chambre gonflable (4, 4') sur son côté radial extérieur et pourvu d'une ouverture de passage (14) pour l'agent d'amortissement, et la pièce en caoutchouc-métal (1, 2) étant reçue, avec les chambres gonflables (4, 4') insérées et fixées en position, par la douille extérieure.

2. Palier à douille élastomère selon la revendication 1, **caractérisé en ce que** des portions du canal (5) reliant entre elles les chambres gonflables (4, 4') sont réalisées dans ou sur l'au moins un élément de renforcement (3) vulcanisé dans la région des extrémités de palier axiales dans le corps de palier.

3. Palier à douille élastomère selon la revendication 1 ou 2, **caractérisé en ce que** la partie de support (12) et le corps moulé élastomère (11) des chambres gonflables (4, 4') sont reliés l'un à l'autre par adhérence.

4. Palier à douille élastomère selon l'une quelconque des revendications 1 à 3, **caractérisé en ce que** le support de canal (13) est posé sur la chambre gonflable respective (4, 4') et comprend sur ses extrémités axiales la partie de support (12) enveloppant en forme de cadre le corps moulé élastomère (11) d'une chambre gonflable (4, 4').

5. Palier à douille élastomère selon l'une quelconque des revendications 1 à 4, **caractérisé en ce que** pour réaliser une paire de chambres gonflables (4, 4'), deux corps moulés élastomères (11) sont reliés l'un à l'autre par une bague (15) constituée du même élastomère, s'étendant dans la direction périphérique (u).

6. Palier à douille élastomère selon l'une quelconque des revendications 1 à 5, **caractérisé en ce que** des butées radiales (16, 16' ; 17, 17') sont disposées au niveau des extrémités de palier axiales, lesquelles butées sont réalisées par des courbures du corps de palier (2) saillant radialement vers l'intérieur à l'intérieur des renfoncements en forme de haricot (9, 9').

7. Palier à douille élastomère selon l'une quelconque des revendications 1 à 5, **caractérisé en ce que** pour la réalisation de butées radiales (17, 17'), un élément de butée (18) en métal ou en plastique pourvu d'évidements pour les nervures (8, 8') est inséré aux extrémités de palier axiales, l'élément de butée (18) étant enfoncé dans le palier soit en tant qu'élément d'une seule pièce depuis l'une des extrémités de palier axiales ou sous forme d'élément en deux parties depuis les deux extrémités de palier axiales entre les fonds (10) des chambres gonflables (4, 4') et la partie interne (1) et présentant aux extrémités de palier axiales des courbures saillant radialement vers l'extérieur.

8. Palier à douille élastomère selon l'une quelconque des revendications 1 à 7, **caractérisé en ce que** les corps moulés élastomères (11) constituant les parois gonflables (6, 6', 7, 7') des chambres gonflables (4, 4') se composent d'un matériau qui présente une grande résistance à la température par rapport au matériau du corps de palier (2).

9. Palier à douille élastomère selon la revendication 8, **caractérisé en ce que** les corps moulés élastomères (11) des chambres gonflables (4, 4') se composent de caoutchouc EPDM.

10. Palier à douille élastomère selon la revendication 8, **caractérisé en ce que** les corps moulés élastomères (11) des chambres gonflables (4, 4') se composent de caoutchouc siliconé.
